(19) Europäisches Patentamt
European Patent Office
Office européen des brevets

(11) **EP 4 538 521 A1**

(12) **EUROPEAN PATENT APPLICATION**
published in accordance with Art. 153(4) EPC

(43) Date of publication:
**16.04.2025 Bulletin 2025/16**

(21) Application number: **23854823.4**

(22) Date of filing: **07.08.2023**

(51) International Patent Classification (IPC):
**F02F 3/26** (2006.01)   **F02B 19/08** (2006.01)

(52) Cooperative Patent Classification (CPC):
**F02B 19/08; F02F 3/26;** Y02T 10/12

(86) International application number:
**PCT/JP2023/028711**

(87) International publication number:
**WO 2024/038789 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.08.2022 JP 2022131288**

(71) Applicant: **MITSUBISHI HEAVY INDUSTRIES
ENGINE
& TURBOCHARGER, LTD.
Sagamihara-shi, Kanagawa 252-5293 (JP)**

(72) Inventors:
• **NAKANO, Hiroki**
**Sagamihara-shi, Kanagawa 252-5293 (JP)**
• **MAKI, Masaya**
**Sagamihara-shi, Kanagawa 252-5293 (JP)**
• **KUROIWA, Takahiro**
**Sagamihara-shi, Kanagawa 252-5293 (JP)**

(74) Representative: **Studio Torta S.p.A.
Via Viotti, 9
10121 Torino (IT)**

(54) **PRECHAMBER-TYPE ENGINE**

(57)     Provided is a prechamber-type engine comprising a cylinder, a cylinder head, and a piston defining a main combustion chamber between the cylinder and the cylinder head. Inside the cylinder head, a pre-combustion chamber communicating with the main combustion chamber via an injection hole is defined. The injection hole extends such that the distance between the center of the injection hole and the central axis line of the cylinder becomes smaller from a prechamber-side opening toward a main chamber-side opening. A top surface of the piston has a recessed piston cavity. In a cross sectional view in which the central axis line of the cylinder and the center of the main chamber side opening are present, a first end that is on the side of the circumferential edge of the main chamber-side opening farther from the central axis line of the cylinder is positioned farther from the central axis line of the cylinder than a second end that is on the side of the circumferential edge of the piston cavity closer to the injection hole.

FIG. 2B

EP 4 538 521 A1

## Description

Technical Field

The present disclosure relates to a prechamber-type engine.

The present application claims priority based on Japanese Patent Application No. 2022-131288 filed in Japan on August 19, 2022, the contents of which are incorporated herein by reference.

Background Art

In the related art, a prechamber-type engine (swirl chamber-type engine) is used as one type of engines. The prechamber-type engine includes a main combustion chamber defined between a piston, a cylinder, and a cylinder head, and a pre-combustion chamber that is communicated with the main combustion chamber through a nozzle hole. The combustion gas (prechamber gas) generated in the pre-combustion chamber is jetted into the main combustion chamber through the nozzle hole due to the volume change of the main combustion chamber caused by the piston movement.

PTL 1 discloses a prechamber-type engine that is intended to promote diffusion combustion in a combustion chamber. In this prechamber-type engine, by making the shape of the piston cavity of the top surface of the piston shallower from the vicinity of the nozzle hole outlet toward the center direction of the cylinder, the generation of the mixed gas in the main combustion chamber is promoted, and the diffusion combustion in the combustion chamber is promoted.

Citation List

Patent Literature

[PTL 1] Japanese Unexamined Patent Application Publication No. 8-93475

Summary of Invention

Technical Problem

However, in the configuration of the related art shown in PTL 1, the piston cavity is provided so as to surround the main chamber-side opening of the nozzle hole in order to maintain a high flow coefficient at all crank angles. That is, the main chamber-side opening and the peripheral edge of the piston cavity are disposed so as not to overlap with each other in the plan view. Therefore, in the configuration of the related art shown in PTL 1, there is a problem in that, at a time when the flow velocity of the nozzle hole is increased, the gas flow from the pre-combustion chamber to the main combustion chamber is peeled off, so that it is not possible to form a strong flow.

The present disclosure has been made in view of the above-mentioned problems, and an object of the present disclosure is to provide a prechamber-type engine capable of suppressing peeling of a flow of prechamber gas from a pre-combustion chamber to a main combustion chamber and increasing the output of the engine by forming a strong flow.

Solution to Problem

In order to achieve the above object, a prechamber-type engine includes a cylinder and a cylinder head, and a piston that defines a main combustion chamber between the cylinder and the cylinder head, in which a pre-combustion chamber that communicates with the main combustion chamber through a nozzle hole is defined inside the cylinder head, the nozzle hole extends from a prechamber-side opening toward a main chamber-side opening such that a distance between a center line of the nozzle hole and a central axis line of the cylinder is reduced, a top surface of the piston has a concave piston cavity, and in a cross-sectional view in which the central axis line of the cylinder and a center of the main chamber-side opening are present, a first end on a side far from the central axis line of the cylinder in a peripheral edge of the main chamber-side opening is located farther from the central axis line of the cylinder than a second end on a side close to the nozzle hole in a peripheral edge of the piston cavity.

Advantageous Effects of Invention

According to the prechamber-type engine of the present disclosure, it is possible to provide a prechamber-type engine capable of suppressing the peeling of the flow of the prechamber gas from the pre-combustion chamber to the main combustion chamber and increasing the output of the engine by forming a strong flow.

Brief Description of Drawings

Fig. 1 is a schematic cross-sectional view of a prechamber-type engine according to an embodiment of the present disclosure.
Fig. 2A is a cross-sectional view around a combustion chamber of the prechamber-type engine according to the embodiment of the present disclosure, and is a cross-sectional view in a case of ATDC 0 degrees.
Fig. 2B is a cross-sectional view around the combustion chamber of the prechamber-type engine according to the embodiment of the present disclosure, and is a cross-sectional view in a case of ATDC 15 degrees.
Fig. 3 is a view illustrating a positional relationship between a top surface of a piston and a nozzle hole according to the embodiment of the present disclosure, and is a view taken along a line A-A shown in Figs. 2A and 2B.

Fig. 4 is an enlarged cross-sectional view around the combustion chamber of the prechamber-type engine according to the embodiment of the present disclosure, and is a view illustrating a flow of prechamber gas that is jetted from a pre-combustion chamber to a main combustion chamber in a case of ATDC 15 degrees.

Fig. 5A is a cross-sectional view around the combustion chamber of the prechamber-type engine according to a comparative aspect of the present disclosure, and is a cross-sectional view in a case of ATDC 0 degrees.

Fig. 5B is a cross-sectional view around the combustion chamber of the prechamber-type engine according to the comparative aspect of the present disclosure, and is a cross-sectional view in a case of ATDC 15 degrees.

Fig. 6 is a view illustrating a positional relationship between a top surface of the piston and the nozzle hole in the comparative aspect of the present disclosure, and is a view taken along line A-A shown in Figs. 5A and 5B.

Fig. 7 is an enlarged cross-sectional view around the combustion chamber of the prechamber-type engine according to the comparative aspect of the present disclosure, and is a view for describing the flow of the prechamber gas jetted from the pre-combustion chamber to the main combustion chamber.

Fig. 8 is an enlarged cross-sectional view around the nozzle hole of the prechamber-type engine according to the embodiment of the present disclosure, and is an enlarged cross-sectional view in a case of ATDC 15 degrees.

Fig. 9 is a graph showing the transition of the flow velocity of the nozzle hole and a rate of volume change of the main combustion chamber in the prechamber-type engine according to the embodiment of the present disclosure.

Fig. 10 is a schematic cross-sectional view of the prechamber-type engine according to another embodiment of the present disclosure.

Fig. 11 is a view illustrating a positional relationship between a top surface of a piston and a nozzle hole according to another embodiment of the present disclosure, and is a view taken along a line B-B shown in Fig. 12.

Fig. 12 is an enlarged cross-sectional view around the nozzle hole of the prechamber-type engine according to another embodiment of the present disclosure, and is an enlarged cross-sectional view in a case of ATDC 15 degrees.

Description of Embodiments

Hereinafter, some embodiments of the present disclosure will be described with reference to the accompanying drawings. However, dimensions, materials, shapes, and relative dispositions of components described as the embodiments or illustrated in the drawings are not intended to limit the scope of the present disclosure, and are merely examples for describing the present disclosure.

For example, expressions representing relative or absolute dispositions such as "in a certain direction", "along a certain direction", "parallel", "orthogonal", "center", "concentric", or "coaxial" not only strictly represent the dispositions, but also represent a state where the dispositions are relatively displaced with a tolerance or at an angle or a distance to such an extent that the same function can be obtained.

For example, expressions representing that things are in an equal state such as "same", "equal", and "homogeneous" not only strictly represent an equal state, but also represent a state where a difference exists with a tolerance or to such an extent that the same function can be obtained.

For example, expressions representing shapes such as a quadrangular shape and a cylindrical shape not only represent shapes such as a quadrangular shape and a cylindrical shape in a geometrically strict sense, but also represent shapes including an uneven portion or a chamfered portion within a range where the same effect can be obtained.

Meanwhile, expressions of "being provided with", "including", or "having" one component are not exclusive expressions excluding existence of other components.

The same reference numerals may be assigned to the same configurations, and description thereof may be omitted.

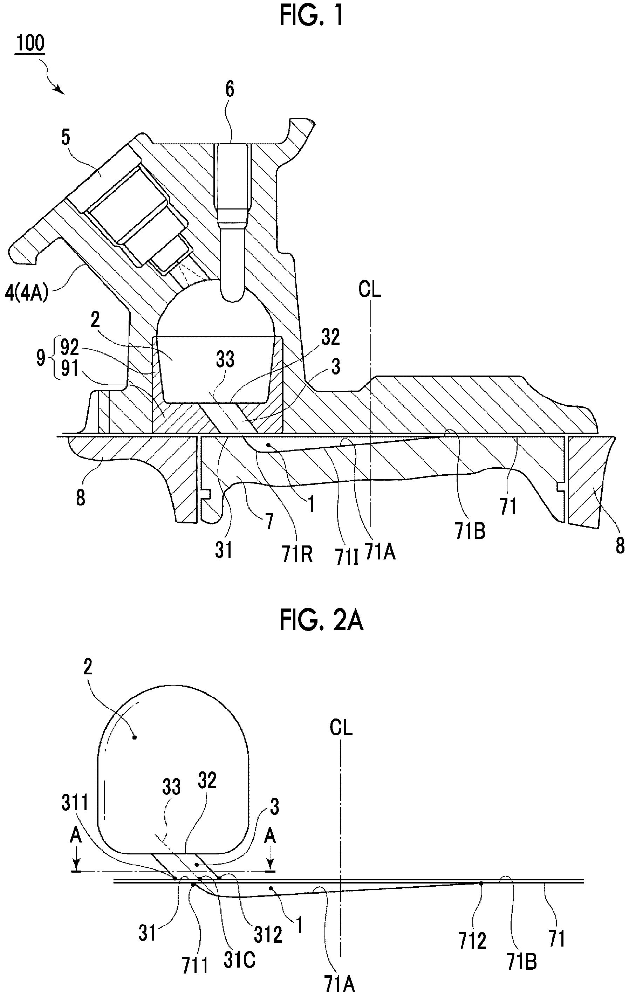

Fig. 1 is a schematic cross-sectional view of a prechamber-type engine according to an embodiment of the present disclosure.

As illustrated in Fig. 1, a prechamber-type engine 100 according to an embodiment of the present disclosure includes a cylinder 8, a cylinder head 4, and a piston 7. The cylinder 8 is a cylindrical member that accommodates the piston 7. The cylinder head 4 is disposed on an upper portion of the cylinder 8. The piston 7 is disposed inside the cylinder 8 so as to be reciprocally movable along a central axis line CL. Then, the main combustion chamber 1 is defined between the cylinder 8 and the cylinder head 4 and the piston 7.

A pre-combustion chamber 2 is defined inside of the cylinder head 4 and is communicated with the main combustion chamber 1 through a nozzle hole 3. The nozzle hole 3 has a main chamber-side opening 31 that is an opening facing the main combustion chamber 1 and a prechamber-side opening 32 that is an opening facing the pre-combustion chamber 2, and is configured with one hole-shaped portion extending from the prechamber-side opening 32 toward the main chamber-side opening 31.

In the embodiment shown in the drawings, the cylinder head 4 includes a cylinder head main body 4A and a prechamber cap 9 that defines the pre-combustion chamber 2 between the cylinder head main body 4A. The prechamber cap 9 includes a disk-shaped main body part 91 facing the piston 7 and the cylinder 8, and a radially extending part 92 that extends radially from an outer peripheral edge portion of the main body part 91 to be separated from the piston 7 and the cylinder 8. The prechamber cap 9 is fastened to the cylinder head main body 4A by a well-known method such as screwing, fitting, or bolting. The above-described nozzle hole 3 is formed in the main body part 91.

In addition, in the embodiment not shown in the drawings, the cylinder head may be configured as a cylinder head in which a portion of the cylinder head main body 4A shown in Fig. 1 and a portion of the prechamber cap 9 are integrally formed. Such a cylinder head is manufactured, for example, by metal laminated molding.

A fuel injector 5 is provided in the cylinder head 4. The fuel injector 5 is configured to inject the fuel into the pre-combustion chamber 2. In addition, the cylinder head 4 is provided with a glow plug 6, and is configured to ignite the fuel injected from the fuel injector 5. The prechamber gas including the ignited combustion gas and the unburned gas is jetted from the pre-combustion chamber 2 to the main combustion chamber 1 through the nozzle hole 3 at a timing at which the piston 7 passes through the top dead center (TDC).

The pre-combustion chamber 2 is provided on one side with respect to the central axis line CL of the cylinder 8. The nozzle hole 3 extends from the prechamber-side opening 32 toward the main chamber-side opening 31 so that the distance between the center line 33 of the nozzle hole 3 and the central axis line CL of the cylinder 8 is reduced.

In the embodiment shown in the drawings, the center line 33 is configured to be a straight line. In the embodiment not shown in the drawings, the center line 33 may be configured to be curved or may be configured by combining a straight line and a curve.

A top surface 71 of the piston 7 has a flat-shaped portion 71B in a flat state and a recessed piston cavity 71A that is recessed with respect to the flat-shaped portion 71B.

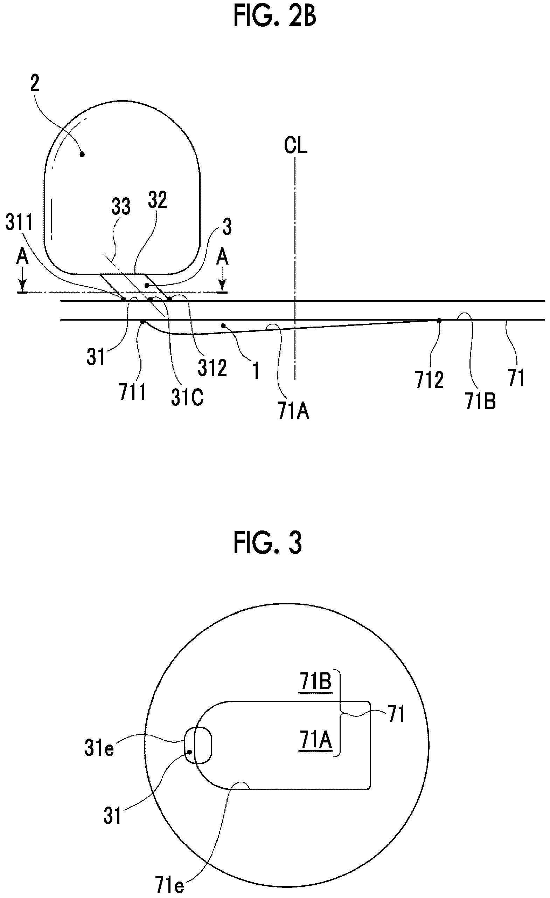

Next, a positional relationship between the piston cavity 71A and the nozzle hole 3 will be described with reference to Figs. 2A, 2B, and 3.

<First Embodiment>

Fig. 2A is a cross-sectional view around a combustion chamber of the prechamber-type engine according to the embodiment of the present disclosure, and is a cross-sectional view in a case of ATDC 0 degrees. Fig. 2B is a cross-sectional view around the combustion chamber of the prechamber-type engine according to the embodiment of the present disclosure, and is a cross-sectional view in a case of ATDC 15 degrees. Fig. 3 is a view illustrating a positional relationship between a top surface of a piston and a nozzle hole according to the embodiment of the present disclosure, and is a view taken along a line A-A shown in Figs. 2A and 2B.

As shown in Figs. 2A and 2B, in the cross-sectional view in which the central axis line CL of the cylinder 8 and the center 31c of the main chamber-side opening 31 are present, a peripheral edge 31e (refer to Fig. 3) of the main chamber-side opening 31 has a first end 311 on a side far from the central axis line CL of the cylinder 8 and a third end 312 on a side close to the central axis line CL. Similarly, the peripheral edge 71e (refer to Fig. 3) of the piston cavity 71A has a second end 711 on a side close to the nozzle hole 3 and a fourth end 712 on a side far from the nozzle hole 3. The first end 311 of the main chamber-side opening 31 is configured to be located farther from the central axis line CL of the cylinder 8 than the second end 711 of the piston cavity 71A.

That is, as shown in Fig. 3, in a plan view in which the top surface 71 of the piston 7 is visually recognized along the extension direction of the central axis line CL of the cylinder 8, a region in which the main chamber-side opening 31 is projected onto the top surface 71 of the piston 7 along the extension direction of the central axis line CL of the cylinder 8 is configured to overlap with the peripheral edge 71e of the piston cavity 71A.

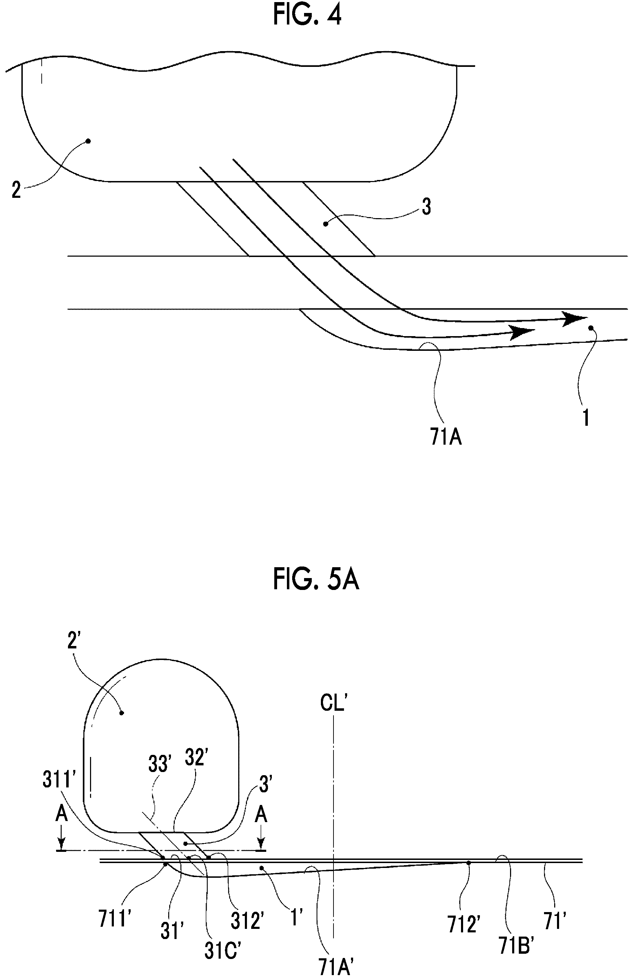

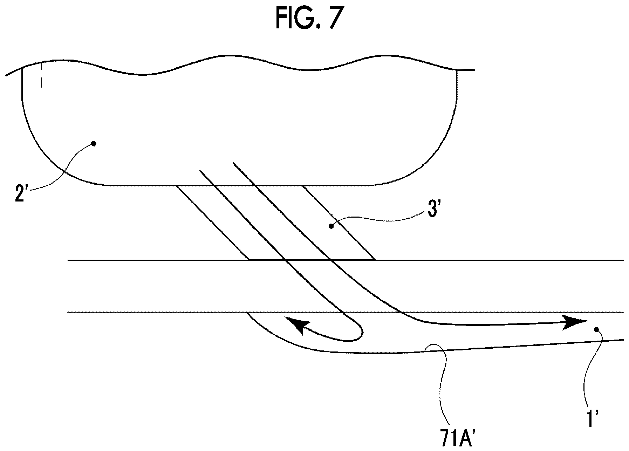

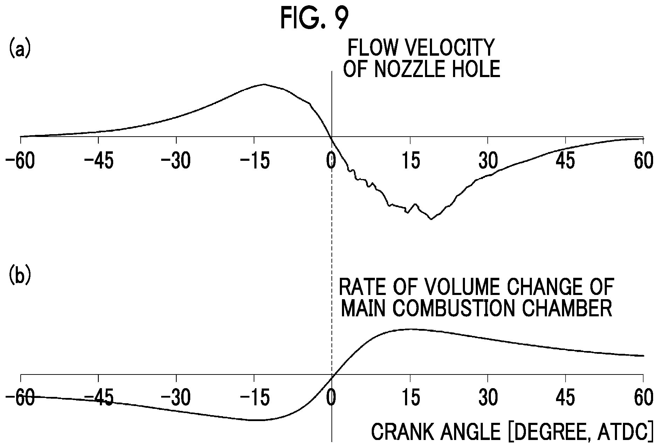

Fig. 4 is an enlarged cross-sectional view around the combustion chamber of the prechamber-type engine according to the embodiment of the present disclosure, and is a view illustrating a flow of prechamber gas that is jetted from a pre-combustion chamber to a main combustion chamber in a case of ATDC 15 degrees. As shown in Fig. 9 which will be described later, a rate of the volume change of the main combustion chamber 1 is particularly large at ATDC 5 to 20 degrees. According to the prechamber-type engine according to one embodiment of the present disclosure, as illustrated in Fig. 4, when the rate of the volume change of the main combustion chamber 1 is large, that is, when the flow velocity of the prechamber gas jetted from the pre-combustion chamber 2 to the main combustion chamber 1 in the nozzle hole 3 is large, it is possible to suppress the peeling of the flow of the prechamber gas from the pre-combustion chamber 2 to the main combustion chamber 1. On the other hand, in a comparative aspect in Fig. 7 described later, the flow of the prechamber gas from the pre-combustion chamber 2 to the main combustion chamber 1 is peeled off.

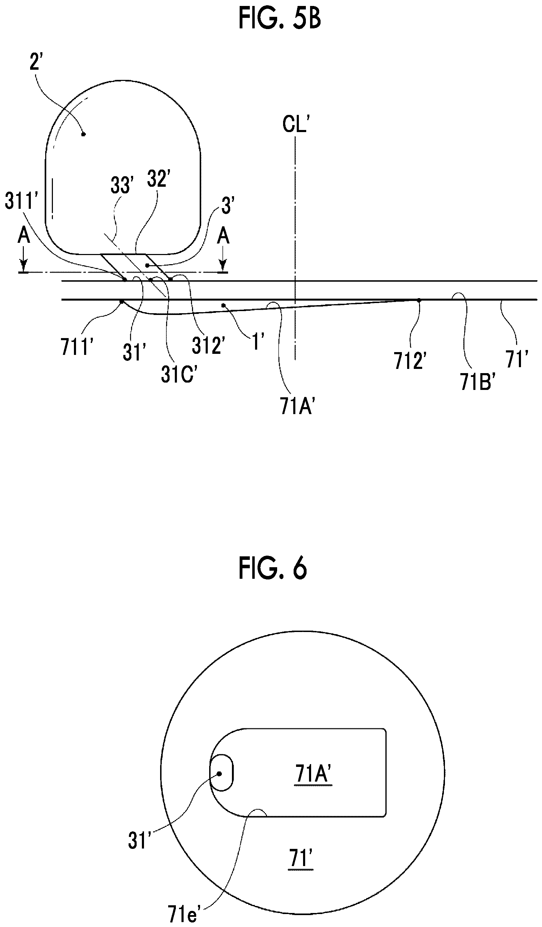

Fig. 5A is a cross-sectional view around the combustion chamber of the prechamber-type engine according to a comparative aspect of the present disclosure, and is a cross-sectional view in a case of ATDC 0 degrees. Fig. 5B is a cross-sectional view around the combustion chamber of the prechamber-type engine according to the comparative aspect of the present disclosure, and is a cross-sectional view in a case of ATDC 15 degrees. Fig. 6 is a view illustrating a positional relationship between a top surface of the piston and the nozzle hole in the comparative aspect of the present disclosure, and is a view taken along line A-A shown in Figs. 5A and 5B. In addition, the reference numerals in the drawings are supplemented with "'" with respect to the corresponding reference numerals of the respective configurations in Figs. 2A, 2B, and 3.

As shown in Figs. 5A and 5B, in the cross-sectional view in which the central axis line CL' of the cylinder 8' and the center 31c' of the main chamber-side opening 31' are present, the first end 311' on a side far from the central axis line CL' of the cylinder 8' in the peripheral edge of the main chamber-side opening 31' is configured to be located at the same distance from the central axis line CL' of the cylinder 8' as the second end 711' on a side close to the nozzle hole 3' in the peripheral edge 71e' (refer to Fig. 6) of the piston cavity 71A'.

That is, as shown in Fig. 6, in a plan view in which the top surface 71' of the piston 7' is visually recognized along the extension direction of the central axis line CL' of the cylinder 8', a region in which the main chamber-side opening 31' is projected onto the top surface 71' of the piston 7' along the extension direction of the central axis line CL' of the cylinder 8' is configured to be in contact with the peripheral edge 71e' of the piston cavity 71A' on the inside.

Fig. 7 is an enlarged cross-sectional view around the combustion chamber of the prechamber-type engine according to the comparative aspect of the present disclosure, and is a view for describing the flow of the prechamber gas jetted from the pre-combustion chamber to the main combustion chamber. As shown in Fig. 7, in the comparative aspect, when the rate of the volume change of the main combustion chamber 1 is large, that is, when the flow velocity of the prechamber gas from the pre-combustion chamber 2' into the main combustion chamber 1' in the nozzle hole 3' is large, the dead space is formed in the vicinity of the second end 711'. Therefore, a part of the prechamber gas flows into the dead space, and a part of the flow of the prechamber gas from the pre-combustion chamber 2' to the main combustion chamber 1' is peeled off from the main flow.

As described above, with the prechamber-type engine 100 according to the embodiment of the present disclosure, when the flow velocity of the prechamber gas from the pre-combustion chamber 2 to the main combustion chamber 1 in the nozzle hole 3 is large, it is possible to suppress the peeling of the flow of the prechamber gas jetted from the pre-combustion chamber 2 to the main combustion chamber 1. With this, by forming a strong flow from the pre-combustion chamber 2 to the main combustion chamber 1, the formation of the mixed gas in the main combustion chamber 1 is promoted, and the high output of the prechamber-type engine 100 can be achieved. In addition, an increase in soot or an increase in exhaust temperature can be suppressed.

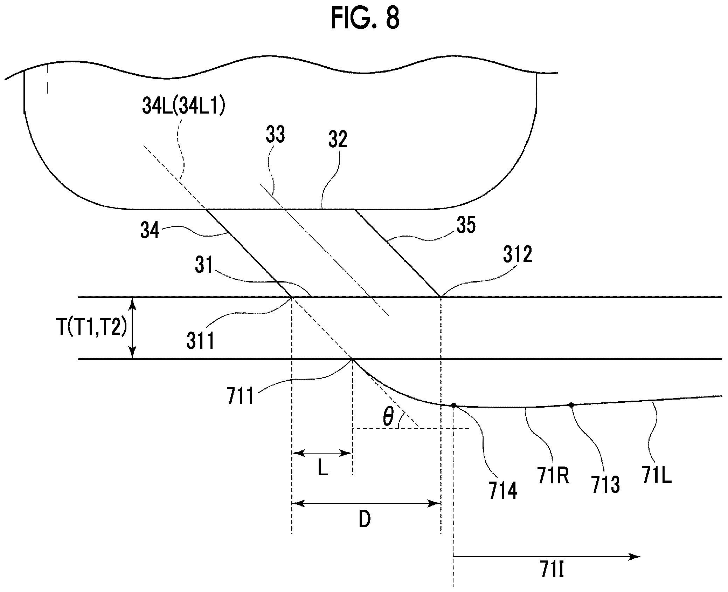

Fig. 8 is an enlarged cross-sectional view around the nozzle hole of the prechamber-type engine according to the embodiment of the present disclosure, and is an enlarged cross-sectional view in a case of ATDC 15 degrees.

In some embodiments, as shown in Fig. 8, in a cross-sectional view in which the central axis line CL of the cylinder 8 and the center 31c of the main chamber-side opening 31 are present, in a case where the width of the main chamber-side opening 31 is defined as D, and the distance between the first end 311 and the second end 711 in the direction orthogonal to the central axis line CL of the cylinder 8 is defined as L, $L/D \geq 0.1$ is satisfied.

The L/D described above is preferably 0.2 or more, and more preferably 0.3 or more and 0.5 or less. In the embodiment shown in the drawings, L/D is about 0.4.

With such a configuration, it is possible to further suppress the peeling of the flow of the prechamber gas from the pre-combustion chamber 2 to the main combustion chamber 1 in a case where the piston 7 is advanced by a predetermined crank angle or more from the top dead center, and it is possible to form a strong flow from the pre-combustion chamber 2 to the main combustion chamber 1.

In some embodiments, as shown in Fig. 8, in a cross-sectional view in which the central axis line CL of the cylinder 8 and the center 31c of the main chamber-side opening 31 are present, the first tangent line 34L1 that is a tangent line 34L of a far-side wall surface 34 of the wall surfaces of the nozzle hole 3 on a side away from the central axis line CL of the cylinder 8 and that passes through the first end 311 passes through the second end 711 of the piston cavity 71A at a predetermined angle of the crank angle of the prechamber-type engine 100 in a range of 5 to 20 degrees after the top dead center (ATDC).

That is, in a cross-sectional view in which the central axis line CL of the cylinder 8 and the center 31c of the main chamber-side opening 31 are present, the distance between the first end 311 and the second end 711 in the direction orthogonal to the central axis line CL of the cylinder 8 is L, and a gap distance between the first end 311 and the second end 711 in a direction parallel to the central axis line CL of the cylinder 8 is T, and in a case where a gap distance in 5 degrees of the crank angle of the prechamber-type engine 100 is defined as T1, a gap distance in 20 degrees of the crank angle of the prechamber-type engine 100 is defined as T2, and an acute angle between the first tangent line 34L1 of the far-side wall surface 34 and the horizontal direction orthogonal to the central axis line CL of the cylinder 8 is defined as θ, a distance L between the first end 311 and the second end 711 in the horizontal direction satisfies the following expression (1).

$$T1/\tan\theta < L < T2/\tan\theta \ \dots \ (1)$$

In the embodiment shown in the drawings, in the cross-sectional view in which the central axis line CL of the cylinder 8 and the center 31c of the main chamber-side opening 31 are present, the nozzle hole 3 has a far-side wall surface 34 on a side away from the central axis line CL of the cylinder 8 and a near-side wall surface 35 on a side close to the central axis line CL of the cylinder 8. Further, the nozzle hole 3 has the same diameter from the prechamber-side opening 32 to the main chamber-side opening 31. In the embodiment not shown in the drawings, a diameter may be narrowed from the prechamber-side opening 32 to the main chamber-side opening 31. With such a configuration, the flow velocity of the prechamber gas from the pre-combustion chamber 2 to the main combustion chamber 1 can be further increased as compared with a case in which the diameter is the same from the prechamber-side opening 32 to the main chamber-side opening 31.

In addition, in the embodiment shown in the drawings, in the cross-sectional view in which the central axis line CL of the cylinder 8 and the center 31c of the main chamber-side opening 31 are present, the far-side wall surface 34 and the near-side wall surface 35 are configured to be straight lines. Therefore, the first tangent line 34L1 matches the tangent line 34L. In the embodiment not shown in the drawings, the far-side wall surface 34 and the near-side wall surface 35 may be configured to be curved, or may be configured to be a combination of a straight line and a curve.

Fig. 9 is a graph showing the transition of the flow velocity of the nozzle hole and a rate of volume change of the main combustion chamber in the prechamber-type engine according to the embodiment of the present disclosure. (a) of Fig. 9 is a graph showing the transition of the flow velocity of the nozzle hole from ATDC -60 degrees to ATDC 60 degrees. (b) of Fig. 9 is a graph showing the transition of the rate of the volume change of the main combustion chamber from ATDC -60 degrees to ATDC 60 degrees.

As shown in Fig. 9, the rate of the volume change of the main combustion chamber 1 is large at a predetermined angle of the crank angle of the prechamber-type engine 100 in a range of ATDC 5 to 20 degrees, that is, the flow velocity of the prechamber gas from the pre-combustion chamber 2 to the main combustion chamber 1 in the nozzle hole 3 is large.

As described above, according to the results of the studies conducted by the present inventors, it has been found that the rate of the volume change of the main combustion chamber 1 is large in a crank angle range of ATDC 5 to 20 degrees, and the flow velocity of the prechamber gas jetted from the pre-combustion chamber 2 to the main combustion chamber 1 is large.

Therefore, with such a configuration, when the rate of the volume change of the main combustion chamber 1 is large, that is, when the flow velocity of the pre-combustion chamber 2 to the main combustion chamber 1 of the prechamber gas in the nozzle hole 3 is large, the first tangent line 34L1 passing through the first end 311 passes through the second end 711 of the piston cavity 71A. That is, the gas jetted from the nozzle hole 3 flows along the side surface of the piston cavity 71A toward the bottom surface from the peripheral edge 71e of the piston cavity 71A.

Therefore, it is possible to further suppress the peeling of the flow of the prechamber gas from the pre-combustion chamber 2 to the main combustion chamber 1, and it is possible to form a strong flow from the pre-combustion chamber 2 to the main combustion chamber 1.

In some embodiments, the first tangent line 34L1 described above passes through the second end 711 of the piston cavity 71A at a predetermined angle at which the crank angle of the prechamber-type engine 100 is in a range of ATDC 10 to 20 degrees. In addition, in some embodiments, the first tangent line 34L1 passes through the second end 711 of the piston cavity 71A at a predetermined angle at which the crank angle of the prechamber-type engine 100 is in a range of ATDC 12 to 18 degrees.

As shown in Fig. 9, when the predetermined angle at which the crank angle of the prechamber-type engine 100 is in a range of ATDC 10 to 20 degrees, and further, when the predetermined angle at which the crank angle of the prechamber-type engine 100 is in a range of ATDC 12 to 18 degrees, the rate of the volume change of the main combustion chamber 1 is large, that is, the flow velocity of the prechamber gas from the pre-combustion chamber 2 to the main combustion chamber 1 in the nozzle hole 3 is large. Therefore, with such a configuration, it is possible to further suppress the peeling of the flow of the prechamber gas from the pre-combustion chamber 2 to the main combustion chamber 1, and it is possible to form a stronger flow from the pre-combustion chamber 2 to the main combustion chamber 1.

In some embodiments, as shown in Fig. 8, in the cross-sectional view in which the central axis line CL of the cylinder 8 and the center 31c of the main chamber-side opening 31 are present, the piston cavity 71A has an R portion 71R that passes through the second end 711.

In the embodiment shown in the drawings, the R portion 71R is configured with a single arc from the second end 711 to the inflection point 713. In the embodiment not shown in the drawings, the R portion 71R may be configured with a plurality of arcs having different curvature radii. In that case, the R portion 71R may include an arc with a small curvature radius that passes through the second end 711 and an arc with a large curvature radius that passes through the inflection point 713.

With such a configuration, the flow of the prechamber gas from the pre-combustion chamber 2 to the main combustion chamber 1 can be made smooth, and it is possible to form a strong flow from the pre-combustion chamber 2 to the main combustion chamber 1.

In some embodiments, as shown in Fig. 8, the R portion 71R has the deepest portion 714 in which the distance from the top surface 71 of the piston 7 to the piston cavity 71A is the largest.

In the embodiment shown in the drawings, the deepest portion 714 is located closer to the central axis line CL of the cylinder 8 than the third end 312 of the main chamber-side opening 31.

With such a configuration, the flow of the prechamber gas from the pre-combustion chamber 2 to the main combustion chamber 1 can be made smooth, and it is possible to form a strong flow from the pre-combustion chamber 2 to the main combustion chamber 1.

In some embodiments, as shown in Figs. 1 and 8, in the cross-sectional view in which the central axis line CL of the cylinder 8 and the center 31c of the main chamber-side opening 31 are present, the piston cavity 71A has an inclined portion 71I that extends from the deepest portion 714 toward a fourth end 712 on a side far from the nozzle hole 3 in the peripheral edge 71e of the piston cavity 71A such that a distance from a top surface 71 (flat-shaped portion 71B) of the piston 7 is reduced.

In the embodiment shown in the drawings, in the cross-sectional view in which the central axis line CL of the cylinder 8 and the center 31c of the main chamber-side opening 31 are present, the inclined portion 71I has an R portion 71R from the deepest portion 714 to the inflection point 713 and a linear portion 71L extending linearly from the inflection point 713 to the fourth end 712.

In addition, as shown in Fig. 3, in a plan view in which the top surface 71 of the piston 7 is visually recognized along the extension direction of the central axis line CL of the cylinder 8, when a direction passing through the central axis line CL of the cylinder 8 and the center 31c of the main chamber-side opening 31 is defined as a first direction, and a direction orthogonal to the first direction is defined as a second direction, the piston cavity 71A having the above-described inclined portion 71I is configured to be longer in the first direction than in the second direction.

With such a configuration, since the bottom portion of the piston cavity 71A has the inclined portion 71I, the gas flow in the main combustion chamber 1 can be made smooth, and the generation of the mixed gas can be promoted. According to the prechamber-type engine 100 of the present disclosure, it is possible to form a strong flow in the main combustion chamber 1 with respect to the piston cavity 71A configured as described above.

<Second Embodiment>

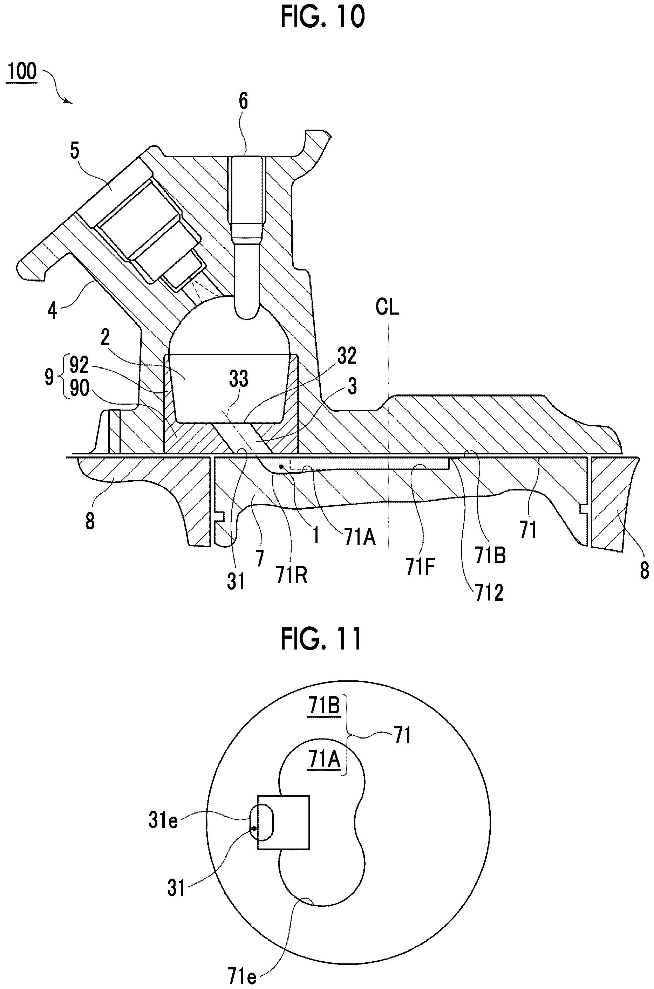

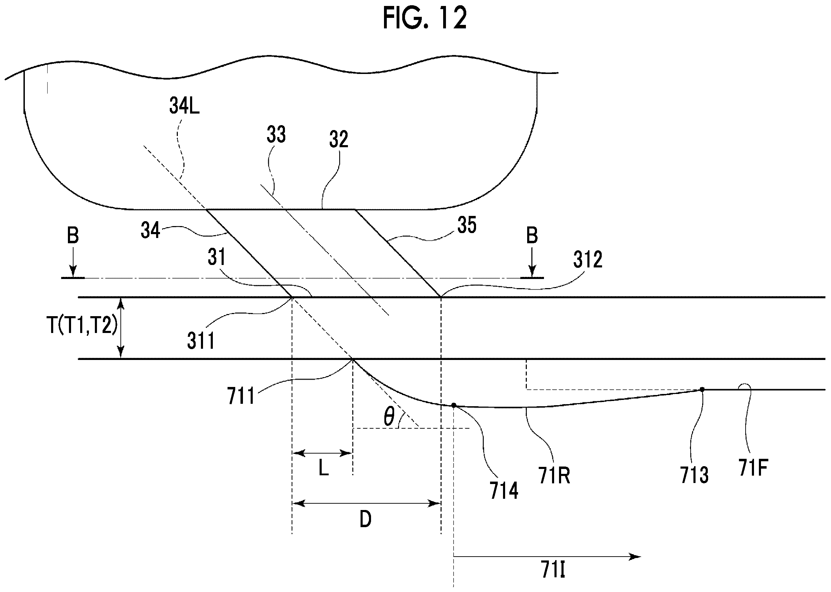

Fig. 10 is a schematic cross-sectional view of the prechamber-type engine according to another embodiment of the present disclosure. Fig. 11 is a view illustrating a positional relationship between a top surface of a piston and a nozzle hole according to another embodiment of the present disclosure, and is a view taken along a line B-B shown in Fig. 12. Fig. 12 is an enlarged cross-sectional view around the nozzle hole of the prechamber-type engine according to another embodiment of the present disclosure, and is an enlarged cross-sectional view in a case of ATDC 15 degrees. In the second embodiment shown in Figs. 10 to 12, only the shape of the piston cavity is different from that in the first embodiment described above. Therefore, the same components are denoted by the same reference numerals, and the detailed description thereof will be omitted.

In some embodiments, as shown in Figs. 10 and 12, in the cross-sectional view in which the central axis line CL of the cylinder 8 and the center 31c of the main chamber-side opening 31 are present, the piston cavity 71A has a flat portion 71F in which a distance from a top surface 71 of the piston 7 is constant.

In the embodiment shown in the drawings, in the cross-sectional view in which the central axis line CL of the cylinder 8 and the center 31c of the main chamber-side opening 31 are present, the piston cavity 71A has an R portion 71R from the second end 711 to the inflection point 713, and a flat portion 71F that passes through the inflection point 713 and extends at a constant distance from the top surface 71 of the piston 7. An end portion of the flat portion 71F on a side far from the nozzle hole 3 forms a step portion through which the fourth end 712 passes.

In the embodiment shown in the drawings, as shown in Fig. 11, in a plan view in which the top surface 71 of the piston 7 is visually recognized along the extension direction of the central axis line CL of the cylinder 8, when a direction passing through the central axis line CL of the cylinder 8 and the center 31c of the main chamber-side opening 31 is defined as a first direction, and a direction orthogonal to the first direction is defined as a second direction, the piston cavity 71A is configured to be longer in the second direction than in the first direction.

In addition, the piston cavity 71A according to the second embodiment is configured such that the first direction is shorter and the second direction is longer than in the first embodiment.

According to the prechamber-type engine 100 of the present disclosure, it is possible to form a strong flow in the main combustion chamber 1 with respect to the piston cavity 71A configured as described above.

In some embodiments, as shown in Fig. 12, in the cross-sectional view in which the central axis line CL of the cylinder 8 and the center 31c of the main chamber-side opening 31 are present, the piston cavity 71A has an R portion 71R that passes through the second end 711.

With such a configuration, the flow of the prechamber gas from the pre-combustion chamber 2 to the main combustion chamber 1 can be made smooth, and it is possible to form a strong flow from the pre-combustion chamber 2 to the main combustion chamber 1.

In some embodiments, as illustrated in Fig. 12, the R portion 71R has the deepest portion 714 in which the distance from the top surface 71 of the piston 7 to the piston cavity 71A is the longest.

In the embodiment shown in the drawings, the deepest portion 714 is located closer to the central axis line CL of the cylinder 8 than the third end 312 of the main chamber-side opening 31.

With such a configuration, the flow of the prechamber gas from the pre-combustion chamber 2 to the main combustion chamber 1 can be made smooth, and it is possible to form a strong flow from the pre-combustion chamber 2 to the main combustion chamber 1.

In the embodiment shown in the drawings, the R portion 71R has a center on a side close to the cylinder head 4 with respect to the piston cavity 71A as a reference and is configured with an arc passing through the second end 711, and has a center on a side far from the cylinder head 4 with respect to the piston cavity 71A as a reference and is configured with an arc passing through the inflection point 713. Therefore, with such a configuration, the inflection of the piston cavity 71A at the inflection point 713 can be made smooth. Therefore, the flow of the prechamber gas from the pre-combustion chamber 2 to the main combustion chamber 1 can be made smooth, and it is possible to form a strong flow from the pre-combustion chamber 2 to the main combustion chamber 1.

In addition, it is possible to appropriately replace the components in the embodiment described above with well-known components within the scope which does not depart from the concept of the present disclosure, and the embodiments described above may be appropriately combined with each other.

For example, contents described in each of the above-described embodiments are understood as follows.

(1) A prechamber-type engine (100) according to one aspect includes

a cylinder (8) and a cylinder head (4), and
a piston (7) that defines a main combustion chamber (1) between the cylinder (8) and the cylinder head (4),
in which a pre-combustion chamber (2) that communicates with the main combustion chamber (1) through a nozzle hole (3) and is defined inside the cylinder head (4),
the nozzle hole (3) extends from a prechamber-side opening (32) toward a main chamber-side opening (31) such that a distance between a center line (31c) of the nozzle hole (3) and a central axis line (CL) of the cylinder (8) is reduced,
a top surface (71) of the piston (7) has a concave piston cavity (71A), and
in a cross-sectional view in which the central axis line (CL) of the cylinder (8) and a center (31c) of the main chamber-side opening (31) are present, a first end (311) on a side far from the central axis line (CL) of the cylinder (8) in a peripheral edge (31e) of the main chamber-side opening (31) is located farther from the central axis line (CL) of the cylinder (8) than a second end (711) on a side close to the nozzle hole (3) in a peripheral edge (71e) of the piston cavity (71A).

According to the prechamber-type engine according to the present disclosure, the nozzle hole extends from the prechamber-side opening toward the main chamber-side opening such that a distance between a center line of the nozzle hole and a central axis line of the cylinder is reduced, and a first end of the nozzle hole is positioned farther from the central axis line of the cylinder than a second end thereof in a cross-sectional view. Therefore, when the rate of the volume change of the main combustion chamber is large, that is, when the flow velocity of the prechamber gas jetted from the pre-combustion chamber in the nozzle hole to the main combustion chamber is large, it is possible to suppress the peeling of the flow of the prechamber gas jetted from the pre-combustion chamber to the main combustion chamber. Accordingly, by forming a strong flow in the main combustion chamber, the formation of the mixed gas in the main combustion chamber is promoted, and the power of the prechamber-type engine can be increased.

(2) A prechamber-type engine (100) according to another aspect is the prechamber-type engine according to (1),

in which in the cross-sectional view, in a case where a width of the main chamber-side opening (31) is denoted by D, and a distance between the first end (311) and the second end (711) in a direction orthogonal to the central axis line (CL) of the cylinder (8) is denoted by L, $L/D \geq 0.1$ is satisfied.
With such a configuration, it is possible to further suppress the peeling of the flow of the prechamber gas that is jetted from the pre-combustion chamber to the main combustion chamber in a case where the piston is advanced by a predetermined crank angle or more from the top dead center, and it is possible to form a strong flow in the main combustion chamber.

(3) A prechamber-type engine (100) according to still another aspect is the prechamber-type engine according to (1) or (2),
in which in the cross-sectional view, a first tangent line (34L1) that is a tangent line (34L) of a far-side wall surface (34) of the wall surfaces of the nozzle hole (3) on a side away from the central axis line (CL) of the cylinder (8) and that passes through the first end (311) passes through the second end (711) of the piston cavity (71A) at a predetermined angle of a crank angle of the prechamber-type engine (100) in a range of 5 to 20 degrees after a top dead center.

According to the study conducted by the present inventors, it has been found that the rate of the volume change of the main combustion chamber is large in a range of 5 to 20 degrees after the top dead center of the crank angle, and the flow velocity of the prechamber gas jetted from the pre-combustion chamber to the main combustion chamber is large.

Therefore, with such a configuration, when the rate of the volume change of the main combustion chamber is large, that is, when the flow velocity of the prechamber gas jetted from the pre-combustion chamber to the main combustion chamber in the nozzle hole is large, the first tangent line passing through the first end passes through the second end of the piston cavity. That is, the prechamber gas jetted from the nozzle hole flows along the side surface of the piston cavity from the peripheral edge of the piston cavity toward the bottom surface.

Therefore, it is possible to further suppress the peeling of the flow of the prechamber gas jetted from the pre-combustion chamber to the main combustion chamber, and it is possible to form a strong flow in the main combustion chamber.

(4) A prechamber-type engine according (100) to still another aspect is the prechamber-type engine according to any one of (1) to (3),

in which in the cross-sectional view, the piston cavity (71A) has an R portion (71R) that passes through the second end (711).

With such a configuration, the flow of the prechamber gas jetted from the pre-combustion chamber into the main combustion chamber can be made smooth, and it is possible to form a strong flow in the main combustion chamber.

(5) A prechamber-type engine (100) according to still another aspect is the prechamber-type engine according to (4),

in which the R portion (71R) has a deepest portion (714) having a largest distance from the top surface (71) of the piston (7) to the piston cavity (71A).

With such a configuration, the flow of the prechamber gas jetted from the pre-combustion chamber (2) into the main combustion chamber (1) can be made smoother, and it is possible to form a strong flow in the main combustion chamber (1).

(6) A prechamber-type engine (100) according to still another aspect is the prechamber-type engine according to (5),

in which in the cross-sectional view, the piston cavity (71A) has an inclined portion (71I) that extends from the deepest portion (714) toward a fourth end (712) on a side far from the nozzle hole (3) in the peripheral edge (71e) of the piston cavity (71A) such that a distance from the top surface (71) of the piston (7) is reduced.

With such a configuration, since the bottom portion of the piston cavity has the inclined portion, the gas flow in the main combustion chamber can be made smooth, and the generation of the mixed gas can be promoted. According to the prechamber-type engine of the present disclosure, it is possible to form a strong flow in the main combustion chamber with respect to the piston cavity configured as described above.

(7) A prechamber-type engine (100) according to still another aspect is the prechamber-type engine according to (5),

in which in the cross-sectional view, the piston cavity (71A) has a flat portion (71F) in which a distance from the top surface (71) of the piston (7) is constant.

According to the prechamber-type engine of the present disclosure, it is possible to form a strong flow in the main combustion chamber with respect to the piston cavity configured as described above.

Reference Signs List

1: main combustion chamber
2: pre-combustion chamber
3: nozzle hole
4: cylinder head
4A: cylinder head main body
5: fuel injector
6: glow plug
7: piston
8: cylinder
9: prechamber cap
31: main chamber-side opening
31c: center
31e, 71e: peripheral edge
32: prechamber-side opening
33: center line
34: far-side wall surface
34L: tangent line
34L1: first tangent line
35: near-side wall surface
71: top surface
71A: piston cavity
71B: flat-shaped portion
71F: flat portion
711: inclined portion
71L: linear portion
71R: R portion
91: main body part
92: radially extending part
100: prechamber-type engine
311: first end
312: third end
711: second end
712: fourth end
713: inflection point
714: deepest portion
CL: central axis line
L: distance

**Claims**

1. A prechamber-type engine comprising:

   a cylinder and a cylinder head; and
   a piston that defines a main combustion chamber between the cylinder and the cylinder head,
   wherein a pre-combustion chamber that communicates with the main combustion chamber through a nozzle hole is defined inside the cylinder head,
   the nozzle hole extends from a prechamber-side opening toward a main chamber-side opening such that a distance between a center line of the nozzle hole and a central axis line of the cylinder is reduced,
   a top surface of the piston has a concave piston cavity, and
   in a cross-sectional view in which the central axis line of the cylinder and a center of the main chamber-side opening are present, a first end on a side far from the central axis line of the cylinder in a peripheral edge of the main chamber-side opening is located farther from the central axis line of the cylinder than a second end on a side close to the nozzle hole in a peripheral edge of the piston cavity.

2. The prechamber-type engine according to Claim 1, wherein in the cross-sectional view, in a case where a width of the main chamber-side opening is denoted by D, and a distance between the first end and the second end in a direction orthogonal to the central axis line of the cylinder is denoted by L, $L/D \geq 0.1$ is satisfied.

3. The prechamber-type engine according to Claim 1, wherein in the cross-sectional view, a first tangent line that is a tangent line of a far-side wall surface of the wall surfaces of the nozzle hole on a side away from the central axis line of the cylinder and that passes through the first end passes through the second end of the piston cavity at a predetermined angle of a crank angle of the prechamber-type engine in a range of 5 to 20 degrees after a top dead center.

4. The prechamber-type engine according to any one of Claims 1 to 3,
   wherein in the cross-sectional view, the piston cavity has an R portion that passes through the second end.

5. The prechamber-type engine according to Claim 4, wherein the R portion has a deepest portion having a largest distance from the top surface of the piston to the piston cavity.

6. The prechamber-type engine according to Claim 5, wherein in the cross-sectional view, the piston cavity has an inclined portion that extends from the deepest portion toward a fourth end on a side far from the nozzle hole in the peripheral edge of the piston cavity such that a distance from the top surface of the piston is reduced.

7. The prechamber-type engine according to Claim 5, wherein in the cross-sectional view, the piston cavity has a flat portion in which a distance from the top surface of the piston is constant.

## FIG. 1

## FIG. 2A

# FIG. 2B

# FIG. 3

## FIG. 4

2

3

71A

1

## FIG. 5A

2'

311'

33' 32'

3'

CL'

A          A

711'   31'   312'   1'

31C'

71A'

712'

71B'   71'

# FIG. 5B

2'

311'

33' 32'

3'

CL'

A

A

711' 31' 312' 1'

31C'

71A'

712'

71B'

71'

# FIG. 6

71A'

31'

71'

71e'

# FIG. 7

## FIG. 8

EP 4 538 521 A1

# FIG. 9

(a)

FLOW VELOCITY
OF NOZZLE HOLE

-60    -45    -30    -15    0    15    30    45    60

(b)

RATE OF VOLUME CHANGE OF
MAIN COMBUSTION CHAMBER

-60    -45    -30    -15    0    15    30    45    60

CRANK ANGLE [DEGREE, ATDC]

# FIG. 10

100

5

6

4

2

9 { 92
     90

33

32

3

CL

8

31

7

71R

1

71A

71F

71B

712

71

8

# FIG. 11

71B

71

71A

31e

31

71e

# FIG. 12

EP 4 538 521 A1

**EP 4 538 521 A1**

| | | |
|---|---|---|
| **INTERNATIONAL SEARCH REPORT** | International application No. | |
| | **PCT/JP2023/028711** | |

**A. CLASSIFICATION OF SUBJECT MATTER**

*F02F 3/26*(2006.01)i; *F02B 19/08*(2006.01)i
FI:  F02B19/08 E; F02B19/08 G; F02F3/26 C

According to International Patent Classification (IPC) or to both national classification and IPC

**B. FIELDS SEARCHED**

Minimum documentation searched (classification system followed by classification symbols)

F02F3/26; F02B19/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-102412 A (KUBOTA CORP.) 07 July 2022 (2022-07-07)<br>paragraphs [0014]-[0039], fig. 1-6 | 1-7 |
| A | JP 8-200072 A (YANMAR DIESEL ENGINE CO., LTD.) 06 August 1996 (1996-08-06)<br>paragraphs [0016]-[0034], fig. 1-26 | 1-7 |
| A | JP 8-93475 A (MITSUBISHI HEAVY INDUSTRIES, LTD.) 09 April 1996 (1996-04-09)<br>paragraphs [0008]-[0013], fig. 1-7 | 1-7 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/028711**

| Patent document cited in search report | | | Publication date (day/month/year) | Patent family member(s) | Publication date (day/month/year) |
|---|---|---|---|---|---|
| JP | 2022-102412 | A | 07 July 2022 | (Family: none) | |
| JP | 8-200072 | A | 06 August 1996 | (Family: none) | |
| JP | 8-93475 | A | 09 April 1996 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022131288 A

- JP 8093475 A